Europäisches Patentamt

European Patent Office

Office européen des brevets

(19)

(11) **EP 1 420 266 A2**

(12) **EUROPÄISCHE PATENTANMELDUNG**

(43) Veröffentlichungstag:
**19.05.2004 Patentblatt 2004/21**

(21) Anmeldenummer: **04003209.6**

(22) Anmeldetag: **28.06.2000**

(51) Int Cl.⁷: **G01S 13/93**, G01S 7/03,
H01Q 1/32, H01Q 23/00,
H01Q 25/00

(84) Benannte Vertragsstaaten:
**DE ES FR GB IT SE**

(30) Priorität: **30.07.1999 DE 19935542**
**23.10.1999 DE 19951123**

(62) Dokumentnummer(n) der früheren Anmeldung(en)
nach Art. 76 EPÜ:
**00943921.7 / 1 245 059**

(71) Anmelder: **Volkswagen Aktiengesellschaft**
**38436 Wolfsburg (DE)**

(72) Erfinder:
 • **Lissel, Ernst**
  **38442 Wolfsburg (DE)**
 • **Jacob, Arne**
  **38116 Braunschweig (DE)**
 • **Schlachetzki, Andreas**
  **38126 Braunschweig (DE)**

 • **Wehmann, Hergo-H.**
  **38527 Meine (DE)**
 • **Peiner, Erwin**
  **38108 Braunschweig (DE)**
 • **Schröter, Holger**
  **81371 München (DE)**
 • **Oberschmidt, Gerald**
  **76646 Bruchsal (DE)**
 • **Metz, Carsten**
  **38104 Braunschweig (DE)**

(74) Vertreter: **Meyer, Enno, Dr.**
 **c/o Jung HML**
 **Patent- und Rechtsanwälte**
 **Schraudolphstrasse 3**
 **80799 München (DE)**

Bemerkungen:
Diese Anmeldung ist am 12 - 02 - 2004 als
Teilanmeldung zu der unter INID-Kode 62
erwähnten Anmeldung eingereicht worden.

(54) **Radarsensor und Radarantenne für ein Überwachen der Umgebung eines Kraftfahrzeugs**

(57) Die vorliegende Erfindung betrifft eine Radarantenne (4) mit einer Rotmanlinse (22), die eine linsenförmige Parallelplattenleitung (56), mindestens zwei Zuleitungsanschlüsse (58a-58e), eine Mehrzahl von Ankopplungsanschlüssen (60) und Verzögerungsleitungen (62) aufweist, und mit einer Gruppenantenne (24), die eine Mehrzahl von Einzelantennen (64) aufweist, die zu mindestens zwei Reihen (66) jeweils in Serie geschaltet sind, wobei jede Reihe (66) mit einem Antennenanschluß (63) mit einer Verzögerungsleitung (62) verbunden ist. Dabei ist für jede Reihe (66) von Einzelantennen (64) eine Verzögerungsleitung (62) vorgesehen, die das von der Parallelplattenleitung (56) an den zugeordneten Ankopplungsanschluß (60) abgegebene hochfrequente Signal auf die Reihe (66) von Einzelantennen (64) überträgt, wobei die Verzögerungsleitungen (62) für verschiedene Reihen (66) von Einzelantennen (64) unterschiedliche Längen aufweisen, und die Differenzen der Signallaufzeiten, die zwischen den Zuleitungsanschlüssen (58a-58e) und den Antennenanschlüssen (63) auftreten, für verschiedene Verzögerungsleitungen (62) für eine vorgegebene Frequenz des hochfrequenten Signals im wesentlichen ganzzahligen Vielfachen der Perioden des Signals entsprechen.

FIG. 6

EP 1 420 266 A2

**Beschreibung**

Die vorliegende Erfindung betrifft eine Radarantenne, die insbesondere für ein Überwachen der Umgebung eines Kraftfahrzeuges geeignet ist, nach dem Oberbegriff des Anspruchs 1.

Derartige Radarantennen werden für unterschiedliche Komfort- und sicherheitsrelevante Fahrerassistenz-Systeme benötigt. Sie verwenden in Fahrtrichtung nach vorne ausgerichtete Sensoren, um Informationen über den Verkehr und Hindernisse auf der Straße zu sammeln. Diese Informationen werden von dem zugeordneten Fahrerassistenz-System verwendet, um eine automatische Distanzregelung oder eine automatische Notbremsfunktion durchzuführen oder für Anwendungen aus dem Bereich der adaptiven Fahrtregelung, der Kollisionsverhinderung und für das zukünftige autonome Fahren von Fahrzeugen zu verwenden.

Aus der IEEE Transactions on Mircowave Theory and Techniques, VOL. 45, NO. 12 Dezember 1997, "Milimeter-Wave Radar Sensor for Automotive Intelligent Cruise Control (ICC)", M. E. Russell et al. ist ein Radarsensor bekannt, der eine Steuerschaltung und eine Radarantenne aufweist, wobei die Steuerschaltung als Sende- und Empfangsmodul ausgebildet ist und wobei die Radarantenne mit mindestens einer Zuleitung mit der Steuerschaltung verbunden ist. Ein Teil der Steuerschaltung ist dabei als MMIC (monolithic millimeterwave integrated circuit) ausgebildet. Darüber hinaus ist die Radarantenne in Form eines gedruckten Schaltkreises ausgebildet und weist eine Rotmanlinse und eine Gruppenantenne auf. Die Rotmanlinse weist eine linsenförmige Parallelplattenleitung, mindestens zwei Zuleitungsanschlüsse, eine Mehrzahl von Ankopplungsanschlüssen und Verzögerungsleitungen auf. Weiterhin ist die Gruppenantenne aus einer Mehrzahl von Einzelantennen aufgebaut, die zu mindestens zwei Reihen in Serie geschaltet sind. Jede dieser Reihe von Einzelantennen ist mit einer Verzögerungsleitung verbunden, die das von der Parallelplattenleitung an den zugeordneten Ankopplungsanschluß abgegebene hochfrequente Signal auf die Reihe von Einzelantennen überträgt.

Ferner zeigen die Druckschriften WO 99 27 385 A, US-A-5 929 802 und US-A-5 675 345 eine Radarantenne nach dem Oberbegriff des Anspruchs 1.

Ein Nachteil bei der aus dem Stand der Technik bekannten Radarantenne besteht darin, daß bei der Übertragung der hochfrequenten Signale zwischen der Gruppenantenne und der Rotmanlinse zwar eine definierte Phasenbeziehung zwischen den jeweiligen Reihen der Einzelantennen und den zugeordneten Ankopplungsanschlüssen der Rotmanlinse gegeben ist. Jedoch ist eine variable Amplitudenverteilung der Hochfrequenzsignale auf die separaten Reihen von Einzelantennen der Gruppenantenne bei dieser Radarantenne nicht möglich. Dadurch kann die Richtungscharakteristik der Gruppenantenne nicht optimal eingestellt werden.

Der Erfindung liegt daher das technische Problem zugrunde, die aus dem Stand der Technik bekannte Radarantenne derart auszugestalten und weiterzubilden, daß die zuvor beschriebenen Nachteile des Standes der Technik behoben werden.

Die Aufgabe wird durch eine Radarantenne mit den Merkmalen des Anspruchs 1 gelöst. Bevorzugte Ausgestaltungen der Erfindung sind Gegenstand der Unteransprüche.

Erfindungsgemäß wird das oben genannte technische Problem gelöst durch eine Radarantenne mit einer Rotmanlinse, die eine linsenförmige Parallelplattenleitung, mindestens zwei Zuleitungsanschlüsse, eine Mehrzahl von Ankopplungsanschlüssen und Verzögerungsleitungen aufweist, und mit einer Gruppenantenne, die eine Mehrzahl von Einzelantennen aufweist, die zu mindestens zwei Reihen jeweils in Serie geschaltet sind, wobei jede Reihe mit einem Antennenanschluß mit einer Verzögerungsleitung verbunden ist, wobei für jede Reihe von Einzelantennen eine Verzögerungsleitung vorgesehen ist, die das von der Rotmanlinse an die zugeordnete Antennenleitung abgegebene hochfrequente Signal auf die Reihe von Einzelantennen überträgt, wobei die Verzögerungsleitungen für verschiedene Reihen von Einzelantennen unterschiedliche Signallaufzeiten, die zwischen den Zuleitungsanschlüssen und den Antennenanschlüssen auftreten, für verschiedene Verzögerungsleitungen für eine vorgegebene Frequenz des hochfrequenten Signals im wesentlichen ganzzahligen Vielfachen der Perioden des Signals entsprechen.

In bevorzugter Weise geben dabei unterschiedliche geometrische Längen der Verzögerungsleitungen die Signallaufzeiten entlang der Verzögerungsleitungen vor.

Andererseits ist es möglich, durch unterschiedliche Dielektrizitätskonstanten der für die Verzögerungsleitungen verwendeten Substrate die Signallaufzeiten entlang der Verzögerungsleitungen vorzugeben. Vorteilhaft ist in jedem Fall, daß die hochfrequenten Signale mit einer durch das eingespeiste Signal vorgegebenen Phasenbeziehung den verschiedenen Reihen von Einzelantennen zugeleitet werden. Dieses ist aufgrund der Schmalbandigkeit des zu übertragenden Hochfrequenzsignals möglich, da die Frequenzunterschiede innerhalb der Bandbreite des Hochfrequenzsignals nur zu vernachlässigbaren Phasendifferenzen aufgrund verschiedener Signallaufzeiten führen. Dadurch wird eine sehr genaue Richtcharakteristik der Gruppenantenne erreicht.

Weitere Merkmale und Vorteile der vorliegenden Erfindung sind in der nachfolgenden Beschreibung von Ausführungsbeispielen näher erläutert. Dabei wird auf die beigefügte Zeichnung bezug genommen. In dieser zeigen

Fig. 1     ein Kraftfahrzeug mit einem Radarsensor, die Abstrahlcharakteristik darstellend,

Fig. 2      ein Blockschaltbild des Radarsensors,

Fig. 3      ein erstes Beispiel eines Radarsensors im Querschnitt,

Fig. 4      ein zweites Beispiel eines Radarsensors im Querschnitt,

Fig. 5      eine Explosionsdarstellung zur Darstellung der Montage eines Schaltungsträgers,

Fig. 6      ein Ausführungsbeispiel einer erfindungsgemäßen Radarantenne in einer Draufsicht,

Fig. 7      eine Einzelantenne in einer Draufsicht,

Fig. 8      einen Ausschnitt aus einer Reihe von Einzelantennen in einer Draufsicht und

Fig. 9      zwei Reihen von Einzelantennen.

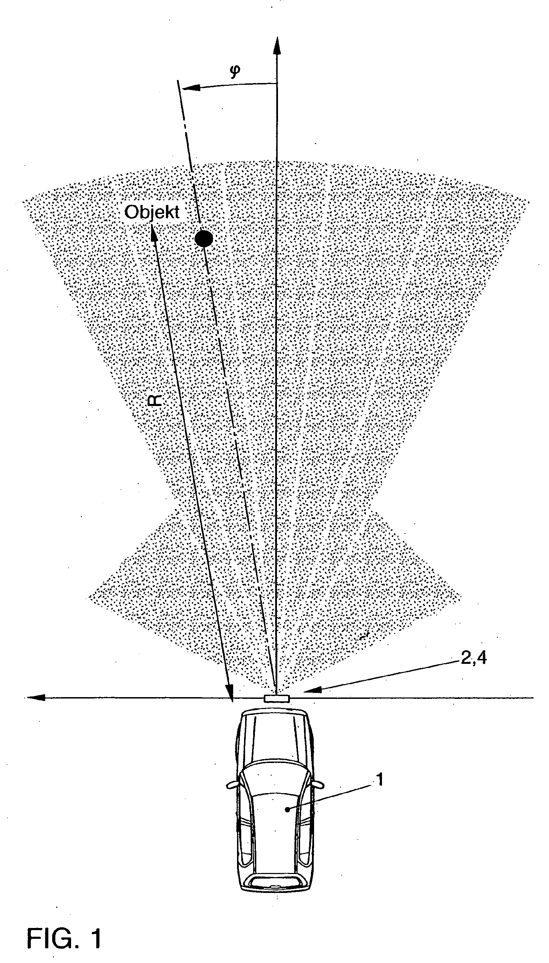

Fig. 1 zeigt ein Kraftfahrzeug 1, das an seinem vorderen Ende im Bereich der Stoßstange einen Radarsensor 2 mit einer Radarantenne 4 aufweist, die eine azimutale Richtcharakteristik aufweist, die für verschiedene Winkelabschnitte φ eine separate Empfindlichkeit aufweist. Somit können Objekte winkelaufgelöst erfaßt werden, um die Umgebung des Kraftfahrzeuges 1 zu charakterisieren. Neben dem Winkel φ ist zudem die Bestimmung des Abstandes R und der relativen Geschwindigkeit v möglich, so daß vorausfahrende Fahrzeuge oder Gegenstände auf der Fahrbahn erkannt werden können, um somit das Fahrverhalten des Kraftfahrzeuges 1 zu beeinflussen.

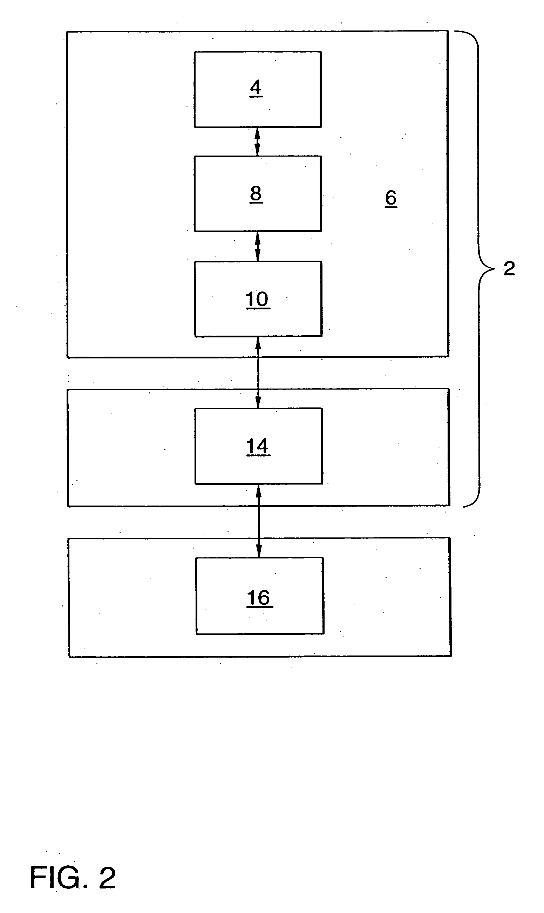

Fig. 2 zeigt mit einem Blockschaltbild den generellen Aufbau des gesamten Radarsensors sowie eines nachgeschalteten Auswertesystems. Im Frontend 6 sind die Radarantenne 4, eine Steuerschaltung 8 und ein Analog/Digital-Wandler 10 angeordnet. Die Steuerschaltung 8 ist dabei als Sende- und/oder Empfangsmodul ausgebildet und weist mindestens ein MMIC-Bauelement auf. Die Radarantenne 4 ist mit mindestens einer Zuleitung 12 mit der Steuerschaltung 8 verbunden.

Der Analog/Digital-Wandler 10 ist mit einem als elektronische Steuerungseinheit ausgebildeten ersten Steuergerät 14 verbunden, das wiederum mit einem zweiten Steuergerät verbunden ist, das bspw. als fahrzeuginterner Auswerterechner ausgebildet ist. In diesem findet die Auswertung der von der Radarantenne 4 empfangenen Signale statt, um in geeigneter Weise auf das Fahrverhalten des Kraftfahrzeuges 1 einzuwirken. Die elektronische Steuerungseinheit des ersten Steuergerätes 14 dagegen dient nicht nur zur Auswertung der von der Radarantenne 4 empfangenen Signale, sondern auch der Ansteuerung der Radarantenne 4 zum Aussenden von Radarsignalen. Daher ist bei dem in Fig. 2 dargestellten Ausführungsbeispiel die Radarantenne 4 monostatisch ausgebildet, dient also sowohl als Sendeantenne als auch als Empfangsantenne. Dagegen ist selbstverständlich auch eine bistatische Ausgestaltung des Radarsensors mit zwei verschiedenen Radarantennen 4 möglich, von denen eine als Sendeantenne und die andere als Empfangsantenne dient. Diese können unterschiedlich dimensioniert sein und jeweils an die Anforderungen als Sende- oder Empfangsantenne angepaßt sein. So reicht bspw. eine kleine Sendeantenne zum vollständigen Ausleuchten des zu überwachenden Bereiches aus, während die Empfangsantenne aufgrund der notwendigen Winkelauflösung eine größere Antennenfläche aufweist.

Eine zentrale Einheit des Radarsensors 2 ist die Steuerschaltung 8, die als Sende- und Empfangsmodul ausgebildet ist. Sie hat zum einen die Aufgabe, das frequenzmodulierte Radarsignal mit ausreichender Leistung der Radarantenne 4 zur Verfügung zu stellen. Zum anderen mischt die Steuerschaltung 8 das von der Radarantenne 4 empfangene Signal mit einem Lokaloszillatorsignal, so daß ein Signal im Basisband entsteht. Die Steuerschaltung 8 als Sende- und Empfangsmodul stellt somit die Schnittstelle zwischen der Signalverarbeitung und der Radarantenne 4 bzw. den Radarantennen 4 dar. Bei der erfindungsgemäßen Ausgestaltung des Radarsensors 2 sind sowohl die Radarantenne 4 als auch die Steuerschaltung 8 in planarer Technik aufgebaut. Wie bereits erwähnt, weist dazu die Steuerschaltung 8 MMIC-Bauelemente auf.

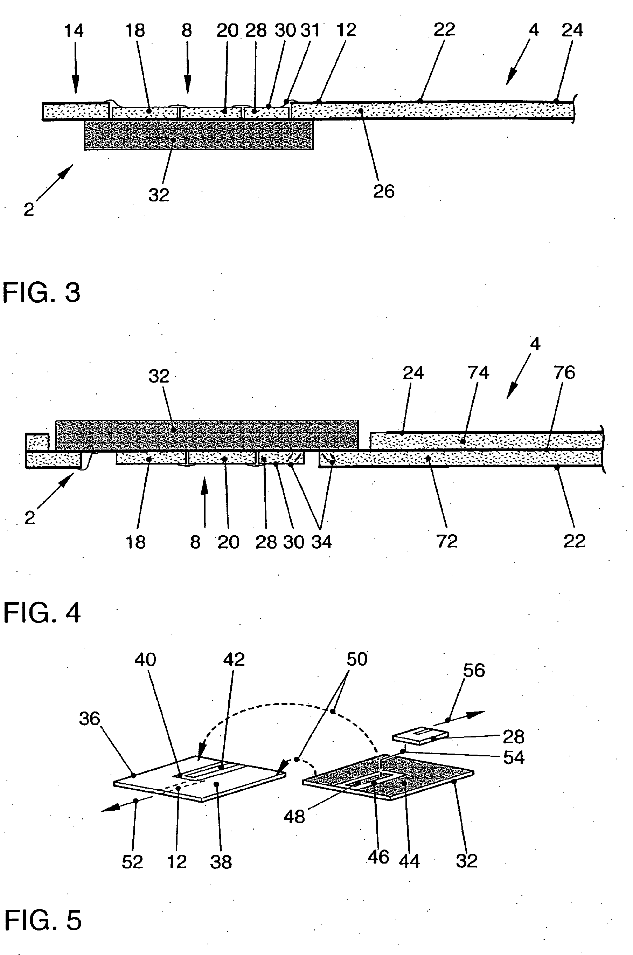

In Fig. 3 ist schematisch ein erstes Beispiel eines Radarsensors dargestellt. Die Steuerschaltung 8 weist zwei MMIC-Bauelemente 18 und 20 auf, die unter anderem die Funktionen des Ozillators und eines I/O-Mischers realisieren. Weiterhin weist der Radarsensor eine planare Radarantenne 4 auf, die - wie unten näher erläutert wird - eine Rotmanlinse 22 und eine Gruppenantenne 24 aufweist, die auf einem Substrat 26 aufgebracht sind.

Weiterhin ist ein Leitungsträger 28 vorgesehen, auf dem Leitungen 30 ausgebildet sind, die zur Übertragung von Hochfrequenzsignalen zwischen den MMIC-Bauelementen 18 und 20 der Steuerschaltung 8 und den Zuleitungen 12 der Radarantenne 4 dienen. Dazu ist der Leitungsträger 28 zwischen der Steuerschaltung 8, also den MMIC-Bauelementen 18 und 20, und der Radarantenne 4 angeordnet.

Wie weiterhin Fig. 3 zeigt, verlaufen die auf dem Leitungsträger 28 ausgebildeten Leitungen 30 im wesentlichen in einer Ebene parallel zu den Leiterbahnen der Steuerschaltung 8 und den Zuleitungen 12 der Radarantenne 4. Dadurch wird erreicht, daß die Verbindungen zwischen den Leitungen 30 und den Zuleitungen 12 der Radarantenne 4 bzw. den MMIC-Bauelementen 18 bzw. 20 sehr kurz ausgebildet werden können. Dadurch werden insbesondere die Verluste bei der Übertragung der Hochfrequenzensignale auf ein Minimum beschränkt.

Dieses gilt insbesondere dann, wenn die Leitungen 30 im wesentlichen auf einer gleichen Höhe wie die Leiterbahnen der Steuerschaltung 8 verlaufen, wie Fig. 3 zeigt. Da der Höhenunterschied zwischen dem Leitungsträger 28 und den Zuleitungen 12 zur Radarantenne 4 ebenfalls nur gering ausfällt, wird hier die vorteilhafte Wirkung kurzer Verbindungen ebenfalls realisiert. Vorliegend ist als Verbindung eine Drahtbondverbindung 31 gewählt worden.

Eine sehr gute Anpassung der Leitungen 30 zur Übertragung von Hochfrequenzsignalen besteht darin, daß diese als Mikrostreifenleitungen auf dem Leitungsträger 28 ausgebildet sind. Dazu ist der Leitungsträger 28 bspw. aus GaAs oder $Al_2O_3$ hergestellt.

Die Herstellung von Mikrostreifenleitungen auf GaAs-Basis erfolgt in einer Mehrzahl von Herstellungsschritten.

In einem ersten Schritt wird ein Wafer in Proben zerteilt, die für die Herstellung der Leitungsträger sinnvolle Größen haben. Dieses geschieht durch Ritzen einer Sollbruchstelle mit einem Diamanten und Brechen des Wafers über einer Kante. Anschließend wird das Waferstück auf eine erforderliche Dicke mittels eines naßchemischen Ätzpolierverfahrens gedünnt. Neben dem Ätzangriff der Ätzlösung, wie bspw. Brommethanollösung, wird die Dickenreduktion auch durch einen rein mechanischen Abrieb auf einem Poliertuch unterstützt. Danach erfolgt eine Reinigung der Waferstücke, um eine gute Haftung der Metallisierung auf dem GaAs sicherzustellen. Dazu werden sowohl das Eigenoxid als auch organische Verschmutzungen von der Halbleiteroberfläche entfernt. Unmittelbar anschließend erfolgt die Metallisierung, um eine Neubildung von Eigenoxid auf der Probenoberflächen zu verhindern. Die Metallisierung besteht aus einem 10nm dicken Haftgrund aus Chrom, einer 100nm dick aufgedampften Goldschicht und schließlich 3μm galvanisch aufgebrachtem Gold. Da eine Mikrostreifenleitung ihr Massepotential auf der Substratunterseite hat, müssen beide Seiten des Waferstückes, das als Substrat dient, mit einer Metallisierung versehen werden. Vor der danach folgenden Lithographie wird die Probe, die aus dem Substrat und der Metallisierung besteht, mit einem Fotolack auf einem Glasträger geklebt. Mit diesem Schritt wird zum einen die Handhabung des empfindlichen GaAs erleichtert und zum anderen wird während des Ätzens die Metallisierung auf der Probenrückseite geschützt. Nach dem Ätzschritt wird der Fotolack in Azeton aufgelöst und die Probe somit wieder von ihrem Träger gelöst. Um sicherzustellen, daß keine Lackreste auf der Probe zurückbleiben, werden diese einem Lackveraschungsschritt unterzogen, so daß vor allem auf den Leiterbahnen keine Lackreste zurückbleiben, die zu einer verschlechterten Haftung eines Bonddrahtes führen. Schließlich werden die Proben hochgenau zu den GaAs-Leitungsträgern zugeschnitten.

Wie Fig. 3 weiterhin zeigt, ist ein Schaltungsträger 32 vorgesehen, der eine stabile Grundlage für die Montage der empfindlichen MMIC-Bauelemente 18 und 20 sowie für den Leitungsträger 28 darstellt. Dazu sind diese mit dem Schaltungsträger 32 mit einem Klebstoff verbunden. Zusätzlich ist die Radarantenne 4 teilweise ebenfalls mit dem Schaltungsträger 32 verbunden. Um eine stabile Grundlage für die verschiedenen Elemente zu bieten, ist das Material des Schaltungsträgers 32 an das thermische Ausdehnungsverhalten der Substrate der MMIC-Bauelemente 18 und 20, des Leitungsträgers 28 und der Radarantenne 4 angepaßt, der insbesondere beim Einsatz mit einem Kraftfahrzeug große Temperaturunterschiede auftreten. Dazu ist im vorliegenden Ausführungsbeispiel $Al_2O_3$ ausgewählt worden. Zudem sind direkt auf dem Substrat des Schaltungsträgers 32 Leitungen zur Spannungsversorgung und zur Verbindung mit dem ersten Steuergerät 14 ausgebildet.

Wie im Zusammenhang mit dem in den Fig. 4 und 5 dargestellten zweiten Beispiel näher erläutert wird, weist der Schaltungsträger 32 darüber hinaus auch eine weitere Funktion auf.

Wie in Fig. 4 dargestellt ist, sind auch bei diesem Beispiel die MMIC-Bauelemente 18 und 20, der Leitungsträger 28 und teilweise die Radarantenne 4 mit dem Schaltungsträger 32 verbunden. Im Gegensatz zu dem in Fig. 3 dargestellten Ausführungsbeispiel ist jedoch der Leitungsträger 28 nicht mittels einer Drahtbondverbindung 31, sondern mit Hilfe einer elektromagnetischen Feldkopplung 34 verbunden, wie anhand der Fig. 5 näher erläutert wird.

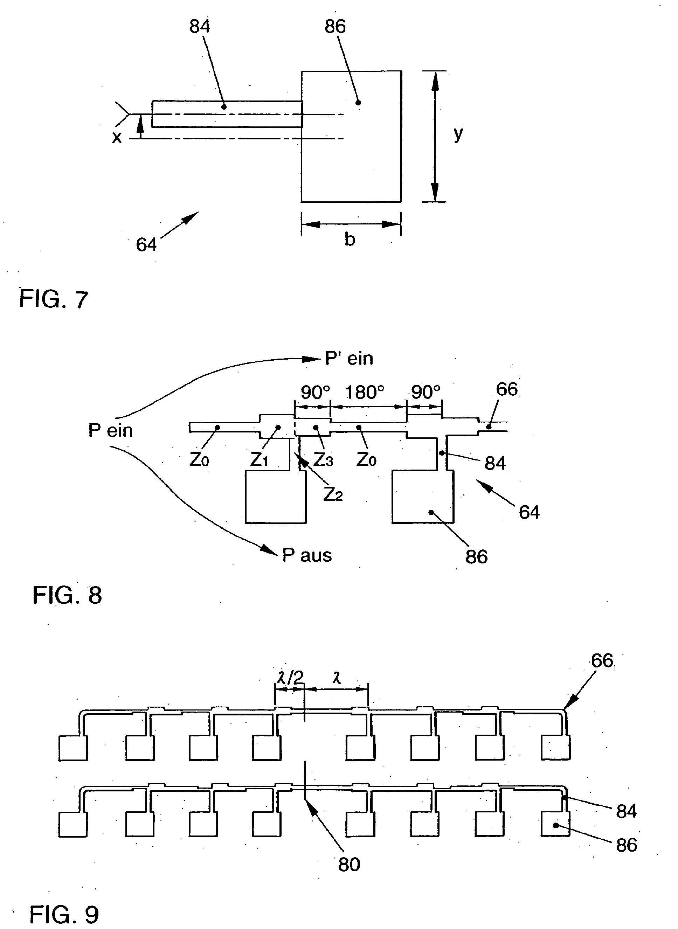

Das Substrat 36, auf dem die Radarantenne 4 zumindest teilweise ausgebildet ist, nämlich in Form der Rotmanlinse 22, weist auf der in Fig. 5 oben dargestellten Seite eine Massemetallisierung auf, die eine Aussparung 40 und darin eine Koplanarleitung 42 aufweist. Auf der in Fig. 5 oben dargestellten Oberfläche des Schaltungsträgers 32 ist symmetrisch zu der Ausgestaltung der Oberfläche des Substrates 36 eine Massemetallisierung 44, eine Aussparung 46 und eine Koplanarleitung 48 ausgebildet. Wie mit dem Pfeilen 50 dargestellt ist, wird der Schaltungsträger 32 mit der in Fig. 5 nach oben dargestellten Oberfläche umgedreht auf dem Substrat 36 zur Anlage gebracht, wodurch die beiden Koplanarleitungen 42 und 48 zumindest teilweise überlappend aneinander anliegen. Somit entsteht ein elektrischer Kontakt zwischen beiden Koplanarleitungen 42 und 48. Die Koplanarleitungen 42 sind auch in Fig. 7 in ihrer Anordnung relativ zu den Zuleitungen 12 dargestellt.

Auf der Unterseite des Substrates 36 ist in Fig. 5 mit gestrichelten Linien eine Zuleitung 12 dargestellt, die als Mikrostreifenleitung ausgebildet ist. Der Pfeil 52 deutet dabei in Richtung der Radarantenne 4, insbesondere der Rotmanlinse 22.

Auf der anderen Seite wird der Leitungsträger 28, der eine Leitung 30 in Form einer Mikrostreifenleitung aufweist mit der der Leitung 30 abgewandten Oberfläche auf dem Schaltungsträger 32 befestigt, wie mit dem Pfeil 54 dargestellt ist. Der Pfeil 56 weist dagegen in Richtung der Steuerschaltung 8, mit der die Leitung 30 verbunden ist.

Sowohl die Zuleitung 12 als auch die Leitung 30 sind nicht mit den Koplanarteitungen 42 bzw. 48 elektrisch leitend verbunden, sondern sie sind jeweils durch die Substrate 36 bzw. 32 von den Koplanarleitungen 42 bzw. 48 beabstandet angeordnet. Somit wird die Leitung 30 mit der Zuleitung 12 über eine Serienschaltung von zwei Mikrostreifen-Koplanar-Übergängen elektromagnetisch miteinander gekoppelt. Der erste Übergang verbindet dabei den Leitungsträger 28 mit dem Schaltungsträger 32 und der zweite Übergang gewährleistet die Ankopplung der Rotmanlinse 22 mit dem Schaltungsträger 32. Dabei erfolgt die Verbindung der beiden Koplanarleitungen 42 und 48 galvanisch durch eine Flip-Chip-Montage. Dadurch wird nicht nur eine vereinfachte Montage erreicht, sondern es treten auch geringere elektrische Verluste gegenüber einer Drahtbondverbindung auf. Nicht zuletzt wird auch die oben beschriebenen modulare Bauweise des Radarsensors durch die Flip-Chip-Montage vereinfacht, da ohne größere Anpassungsprobleme unterschiedliche MMIC-Bauelemente verschiedener Steuerschaltungen mit dem Schaltungsträger 32 und der Radarantenne 4 verbunden werden können. Zudem ist die zuvor beschriebene Bauweise platzsparend.

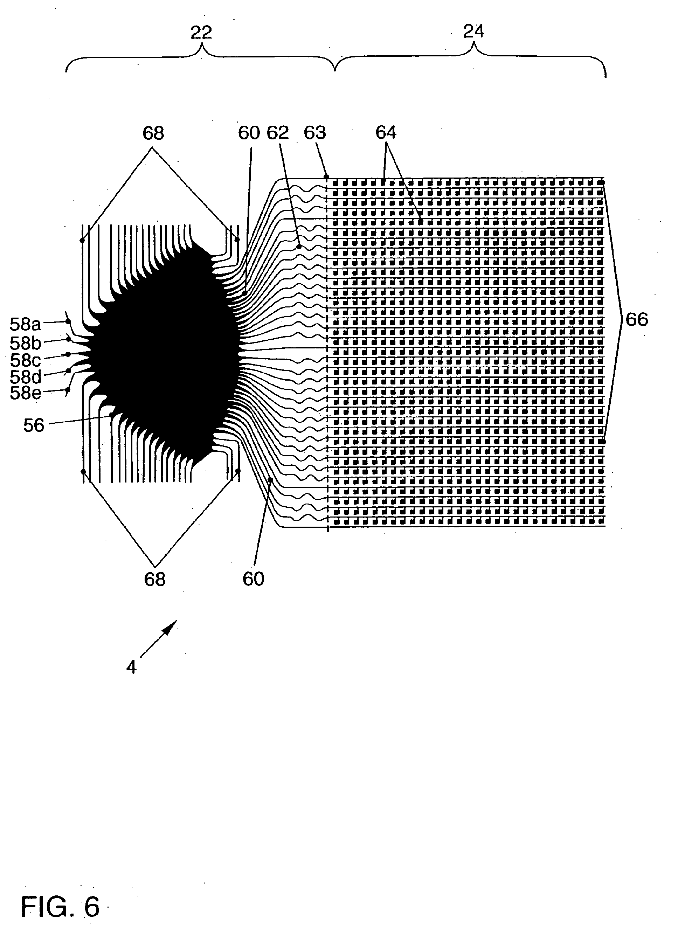

In Fig. 6 ist ein Ausführungsbeispiel einer erfindungsgemäßen Radarantenne 4, die in den oben beschriebenen Beispielen eines Radarsensors 2 Anwendung finden kann, dargestellt. Die Radarantenne 4 weist eine Rotmanlinse 22 auf, die eine linsenförmige Parallelplattenleitung 56, fünf Zuleitungsanschlüsse 58a bis 58e, eine Mehrzahl von Ankopplungsanschlüssen 60 und Verzögerungsleitungen 62 aufweist. Weiterhin weist die Radarantenne 4 eine Gruppenantenne 24 auf, die eine Mehrzahl von Einzelantennen 64 aufweist, die zu einer Mehrzahl von Reihen 66 in Serie geschaltet sind. Für jede Reihe 66 von Einzelantennen 64 ist eine Verzögerungsleitung 62 vorgesehen, die das von der Parallelplattenleitung 56 an den jeweils zugeordneten Ankopplungsanschluß 60 abgegebene hochfrequente Signal auf die Reihe 66 von Einzelantennen überträgt. Alle anderen Anschlüsse 68 dienen dem elektrischen Abschluß der Parallelplattenleitung 56 und sind mit einem Absorbermaterial bspw. in Form einer Folie (nicht dargestellt) abgedeckt. Um Vielfachreflexionen innerhalb des Gebietes der Parallelplattenleitung 56 zu vermeiden, sind sämtliche Anschlüsse, also die Zuleitungsanschlüsse 58a bis 58e die Ankopplungsanschlüsse 60 sowie die Abschlußanschlüsse 68 mit Klopfenstein-Tapern impendanzangepaßt in Mikrostreifenleitungen überführt. Dabei werden die in Fig. 6 links dargestellten Zuleitungsanschlüsse 58a bis 58e der elektronischen Steuerschaltung 8 und die rechts dargestellten Ankopplungsanschlüsse 60 der Gruppenantenne 24 zugeführt.

Die Form der Parallelplattenleitung 56 und der Verzögerungsleitungen 62 ist so ausgebildet, daß bei einer geeigneten Anregung in der Fokusebene, die in Fig. 6 im Bereich der Zuleitungsanschlüsse 58a bis 58e liegt, eine gezielte Phasenbelegung an den in Fig. 6 dargestellten Antennenanschlüssen 63 realisiert wird. Somit liegt bei einem hochfrequenten Signal schmaler Bandbreite und bei einer Einspeisung über den mittleren Zuleitungsanschluß 58c an den Ankopplungsanschlüssen 63 ein gleichphasiges hochfrequentes Signal an. Wird dagegen das hochfrequente Signal an einem der beiden äußeren Zuleitungsanschlüsse 58a oder 58e zugeführt, so liegt ein Signal an den Ankopplungsanschlüssen 63 an, das eine feste Phasenbeziehung vorgibt, jedoch eine Phasenverschiebung zwischen den einzelnen Ankopplungsanschlüssen 60 aufweist. Dabei sind die Parallelplattenleitung 56 und die Verzögerungsleitungen 62 derart ausgebildet, daß die Phasenbeziehung linear von den oberen bis zu den unteren in Fig. 6 dargestellten Ankopplungsanschlüssen 63 verläuft. Die Parallelplattenleitung 56 ist dabei so ausgebildet, daß für drei Brennpunkte der Linse ein exakt linearer Phasenverlauf erreicht wird. Bspw. stellen die beiden äußeren Zuleitungsanschlüsse 58a und 58e sowie der mittlere Zuleitungsanschluß 58c die drei Brennpunkte der Rotmanlinse dar.

Erfindungsgemäß weisen die Verzögerungsleitungen 62 für verschiedene Reihen 66 von Einzelantennen 64 unterschiedliche Längen auf, wobei Differenzen zwischen den Signallaufzeiten, die zwischen den Zuleitungsanschlüssen und den Antennenanschlüssen auftreten, für verschiedene Verzögerungsleitungen für eine vorgegebene Frequenz des hochfrequenten Signals im wesentlichen ganzzahligen Vielfachen der Perioden des Signals entsprechen. Dadurch wird gewährleistet, daß die an den Ankopplungsanschlüssen 63 anliegenden hochfrequenten Signale mit ihrer vorgegebenen Phasenbeziehung den Reihen 66 der Einzelantennen 64 zugeführt werden. Wird bspw. der mittlere Zuleitungsanschluß 58c mit dem hochfrequenten Signal beaufschlagt, so entstehen an den Ankopplungsanschlüssen 63 Hochfrequenzsignale, deren Phasenverschiebung im wesentlichen gleich null ist. Denn die Laufzeitunterschiede der Signale entlang der verschiedenen Verzögerungsleitungen 62 entsprechen jeweils einem ganzzahligen Vielfachen der Periode des hochfrequenten Signals, so daß trotz unterschiedlicher Signallaufzeiten die Phasenbeziehungen zwischen allen an den Reihen 66 anliegenden hochfrequenten Signalen im wesentlichen erhalten bleiben. Da jedoch die äußerern Verzögerungsleitungen 62 eine größere Länge als die mittleren Verzögerungsleitungen 62, werden die Hochfrequenzsignale außen stärker gedämpft, so daß sich eine Amplitudenverteilung innerhalb der Gruppenantenne 24 ausbildet, die in der Mitte höhere und außen eine geringere Amplitude aufweist. Dadurch läßt sich vorteilhaft die Richtcharakteristik der Gruppenantenne 24 beeinflussen.

Bei dem in Fig. 6 dargestellten Ausführungsbeispiel werden die unterschiedlichen Signallaufzeiten entlang der Verzögerungsleitungen 62 durch unterschiedliche geometrische Längen vorgegeben. Dieses ist deutlich an den mehr oder weniger kurvenförmig verlaufenden Konturen der Verzögerungsleitungen 62 zu erkennen. Ebenso ist es möglich, die Signallaufzeiten durch unterschiedliche Dielektrizitätskonstanten der für die Verzögerungsleitungen 62 verwendeten Substrate einzustellen, da sich die elektromagnetischen Signale entlang der Verzögerungsleitungen ausbreiten und von der Dielektrizitätskonstanten des Substrates in ihrer Laufzeit beeinflußt werden.

Durch die phasengenaue Ansteuerung der Einzelantennen 64 der Gruppenantenne 24 ist ein sehr genaues Einstellen der Richtcharakteristik der Radarantenne 4 möglich. Die Richtcharakteristik der Antenne weist jeweils eine Hauptkeule auf, während zu beiden azimutalen Richtungen Nebenkeulen auftreten, deren Intensität erheblich geringer als die der Hauptkeule ist. Die azimutale Ausrichtung der Hauptkeule läßt sich durch eine unterschiedliche Ansteuerung der Rotmanlinse über die unterschiedlichen Zuleitungsansschlüsse 58a bis 58e steuern. Denn je nach Phasenbeziehung zwischen den verschiedenen Einzelantennen 64 wird die Richtung der Hauptkeule verschoben. Dadurch wird eine Winkelauflösung der Radarantenne 4 ohne ein mechanisches Verstellen allein auf elektronischem Weg erreicht.

Die Richtcharakteristik der Gruppenantenne 24 wird auch dadurch beeinflußt, daß die in Fig. 6 oben und unten angeordneten Reihen 66 der Einzelantennen 64 mit einem Signal beaufschlagt werden, dessen Amplitude geringer ist, als es für die in Fig. 6 in der Mitte dargestellten Reihen 66 der Fall ist, wie bereits oben erläutert worden ist. Dadurch wird die Erzeugung elektromagnetischer Strahlung in der Mitte der flächigen Gruppenantenne 24 konzentriert. Eine Ansteuerung mit unterschiedlicher Amplitude wird dabei dadurch erreicht, daß die Verzögerungsleitungen für die äußeren Reihen 66 erheblich länger als für die mittleren Reihen 66 sind, wodurch das hochfrequente Signal bis zu seinem Eintreten in die äußeren Reihen 66 stärker abgeschwächt wird, als es für die mittleren Verzögerungsleitungen 62 der Fall ist. Allein aufgrund von Dämpfungseffekten wird somit eine geeignete Amplitudenverteilung der hochfrequenten Signale innerhalb der Gruppenantenne 24 erreicht.

Wie in Fig. 6 dargestellt ist, sind die Verzögerungsleitungen 62 mit jeweils einem der beiden Enden der Reihen 66 von Einzelantennen 64 verbunden. Dabei sind die Rotmanlinse 22 und die Gruppenantenne 24 auf einem Substrat ausgebildet, was im wesentlichen der in Fig. 3 dargestellten Ausführungsform entspricht. Somit sind die Rotmanlinse 22 und die Gruppenantenne 24 im wesentlichen in einer Ebene angeordnet, wodurch eine planare Ausbildung der gesamten Radarantenne erreicht wird.

Zuvor ist die Ansteuerung der Gruppenantenne 24 als Sendeantenne beschrieben worden, wobei die elektromagnetischen Signale von der Rotmanlinse 22 auf die Gruppenantenne 24 erfolgt. Bei einer Verwendung der Gruppenantenne 24 als Empfangsantenne erfolgt die Signalausbreitung auf dem umgekehrten Weg.
In den Fig. 7 bis 9 ist eine genauere Ausgestaltung der Einzelantennen sowie der Reihen 66 von Einzelantennen 64 im Detail dargestellt.
Fig. 7 zeigt eine Einzelantenne 64 mit einer Zuleitung 84, die als Mikrostreifenleitung ausgebildet ist, und mit einer Strahlungsfläche 86, die auch Patch genannt wird. Die Länge der Strahlungsfläche 86, in Fig. 8 mit y bezeichnet, ist durch die Frequenz des hochfrequenten Signals vorgegeben und entspricht im wesentlichen der halben Wellenlänge der Strahlung im Substrat. Dagegen sind die Breite (b) und die relative Lage des Einspeisepunktes (x) in Grenzen wählbar, wobei beide Parameter aufeinander abgestimmt sind, um eine gute Eingangsanpassung zu gewährleisten. Die mit y gekennzeichnete Kante der Strahlungsfläche 86 wird auch als nicht strahlende Seite und die beiden mit b gekennzeichneten Kanten als strahlenden Seiten der Strahlungsfläche 86 bezeichnet. Die beiden Parameter Breite (b) und Länge (y) sind in Grenzen veränderbar, wodurch die Größe der aus der Reihe 66 für die jeweilige Einzelantenne 64 ausgekoppelten Leistung und darüber die Amplitudenverteilung innerhalb der Reihe 66 einstellbar ist.

Zur Ansteuerung einer Reihe 66 von Einzelantennen 64 wird ein Speisenetzwerk in Form einer Dreitor-Serienschaltung aufgebaut, wie sie in Fig. 9 dargestellt ist. Ein Dreitor ist aus zwei $\lambda/4$-Transformatoren und einem Einzelantennen-Abzweig zusammengesetzt. Unter der Voraussetzung, daß alle Einzelantennen 64 gleichphasig arbeiten, müssen die Auskoppelpunkte demnach elektrisch 360° voneinander entfernt sein. Das Verbindungstück zwischen zwei Dreitoren muß deshalb eine elektrischen Phasendrehung von 180° realisieren. Die einzelnen Dreitore sind weiterhin so ausgelegt, daß je nach gewünschter Amplitudenbelegung der Einzelantennen 64 entlang der Reihe 66 ein definierter Anteil der Leistung $P_{ein}$ im Speisestrang in die Zuleitung der Einzelantenne 64 ausgekoppelt wird.
Für die einzelnen Impedanzen gilt bei festgelegtem auszukoppelnden Anteil $\alpha$ und freigewähltem Impedanzniveau $Z_0$ des Speisestranges:

$$Z_1 = \sqrt{\alpha Z_0 Z_2},$$

$$Z_3 = \sqrt{\alpha(1-\alpha)^{-1} Z_0 Z_2}.$$

Aus den Formeln wird klar, daß neben dem Impedanzniveau $Z_0$ auch der Anteil der ausgekoppelten Leistung frei gewählt werden kann. $Z_2$ ist das Impedanzniveau der Zuleitung 84 der Einzelantenne 64, während $Z_0$ als Impedanzniveau des Speisestranges bezeichnet werden soll.
Neben der in Fig. 8 dargestellten Anordnung abgezweigter Einzelantennen können diese auch innerhalb des Stranges in Reihe angeordnet bzw. aufgefädelt sein. Die Amplitude der jeweils ausgekoppelten Signale wird dann über die Breite der Strahlungsflächen gesteuert.

In Fig. 9 ist die Positionierung der Anschlußpunkte 80 entlang zweier Reihen 66 dargestellt. Die Anschlußpunkte 80 sind im wesentlichen in der Mitte der Reihen 66 angeordnet, wobei, wie Fig. 10 zeigt, eine Unterteilung in $\lambda/2$ und $\lambda$ vorgenommen wird, um bei sich entlang der Reihen 66 in zwei verschiedenen Richtungen ausbreitenden elektromagnetischen Wellen eine gleiche Phase der links und rechts vom Anschlußpunkt 80 liegenden Einzelantennen 64 zu gewährleisten.

Bei dem zuvor beschriebenen Ausführungsbeispiel der Radarantenne 4 sind die Substrate der Rotmanlinse 22 und der Gruppenantenne 24 aus einem keramikgefüllten Komposit aus Polytetrafluoroethylene (PTFE) hergestellt. Dadurch wird eine flexible Ausgestaltung der Form der Radarantenne 4 und nicht zuletzt darüber auch des Radarsensors 2 ermöglicht.

Weisen darüber hinaus die Substrate 72 und 74 unterschiedliche Dielektrizitätskonstanten auf, so kann die Größe der Rotmanlinse 22 bei einer Verwendung einer hohen Dielektrizitätkonstante unabhängig von der durch die äußere Form der Gruppenantenne 24 vorgegebenen Abmessungen hinaus verkleinert werden.

**Patentansprüche**

1. Radarantenne,

   - mit einer Rotmanlinse (22), die eine linsenförmige Parallelplattenleitung (56), mindestens zwei Zuleitungsanschlüsse (58), eine Mehrzahl von Ankopplungsanschlüssen (60) und Verzögerungsleitungen (62) aufweist, und
   - mit einer Gruppenantenne (24), die eine Mehrzahl von Einzelantennen (64) aufweist, die zu mindestens zwei Reihen (66) jeweils in Serie geschaltet sind, wobei jede Reihe (66) mit einem Antennenanschluß (63) mit einer Verzögerungsleitung (62) verbunden ist,
   - wobei für jede Reihe (66) von Einzelantennen (64) eine Verzögerungsleitung (62) vorgesehen ist, die das von der Parallelplattenleitung (56) an den zugeordneten Ankopplungsanschluß (60) abgegebene hochfrequente Signal auf die Reihe (66) von Einzelantennen (64) überträgt,

   **dadurch gekennzeichnet,**

   - **daß** die Verzögerungsleitungen (62) für verschiedene Reihen (66) von Einzelantennen (64) unterschiedliche Längen aufweisen, und
   - **daß** die Differenzen der Signallaufzeiten, die zwischen den Zuleitungsanschlüssen (58) und den Antennenanschlüssen (63) auftreten, für verschiedene Verzögerungsleitungen (62) für eine vorgegebene Frequenz des hochfrequenten Signals im wesentlichen ganzzahligen Vielfachen der Perioden des Signals entsprechen.

2. Radarantenne nach Anspruch 1, **dadurch gekennzeichnet, daß** unterschiedliche Längen der Verzögerungsleitungen (62) die Signallaufzeiten entlang der Verzögerungsleitungen (62) vorgeben.

3. Radarantenne nach Anspruch 1 oder 2, **dadurch gekennzeichnet, daß** unterschiedliche Dielektrizitätskonstanten der für die Verzögerungsleitungen (62) verwendeten Substrate die Signallaufzeiten entlang der Verzögerungsleitungen (62) vorgeben.

4. Radarantenne nach einem der Ansprüche 1 bis 3, **dadurch gekennzeichnet, daß** die Verzögerungsleitungen (62) mit jeweils einem der beiden Enden der Reihen (66) von Einzelantennen (64) verbunden sind.

5. Radarantenne nach einem der Ansprüche 1 bis 4, **dadurch gekennzeichnet, daß** die Rotmanlinse (22) und die Gruppenantenne (24) auf einem Substrat (36) ausgebildet sind, das vorzugsweise aus einem keramikgefüllten Komposit aus Polytetrafluoroethylene (PTFE) hergestellt ist.

6. Radarantenne nach einem der Ansprüche 1 bis 5, **dadurch gekennzeichnet, daß** die Rotmanlinse (22) und die Gruppenantenne (24) im wesentlichen in einer Ebene angeordnet sind.

FIG. 1

FIG. 2

14    18    8    20 28 30 31  12         22         4    24

FIG. 3

2

32                                                      26

32                          24    74         4      76

2

18    8  20  28 30 34              72              22

FIG. 4

40      42         50              56

36

28
54

52  12  38          48      46  44    32

FIG. 5

FIG. 6

84    86

y

b

64

FIG. 7

P' ein

90°    180°    90°    66

P ein

$Z_0$    $Z_1$    $Z_3$    $Z_0$    84

$Z_2$

64

P aus    86

FIG. 8

66

$\lambda/2$    $\lambda$

84

86

80

FIG. 9